# EUROPEAN PATENT APPLICATION

(11) **EP 0 750 153 A2**
(43) Date of publication of application: **27.12.1996**
(21) Application number: 96304637.0
(22) Date of filing: 21.06.1996
(51) Int. Cl.: F16L 37/084

(54) **Improvements in or relating to tube couplings**

(30) Priority: 23.06.1995 GB 9512867
(71) Applicant: Guest, John Derek, Maidenhead, Berkshire SL6 2EX (GB)
(72) Inventor: Guest, John Derek, Maidenhead, Berkshire SL6 2EX (GB)
(74) Representative: Bayliss, Geoffrey Cyril

(57) **Abstract**

The disclosure relates to a tube coupling comprising a coupling body (12) having a throughway (13) open at one end (15) to receive a tube (11). The throughway has an enlarged portion (14) adjacent the open end for the tube to be connected to the coupling body containing a seat (17) to receive and locate an end part of the tube and seals (20,21) to seal with the tube. The coupling body contains one collet (25) to lock the tube in the body and a further collet (36) mounted outside the coupling body adjacent the open end of the throughway to engage an annular abutment on the tube to hold the tube in the coupling body. The tube end (40) is closed and the tube wall adjacent the end has one or more side ports (41) for the gas or liquid medium to flow. The arrangement is such that the end part of the tube containing the side ports does not project through the seals in the throughway to communicate with the enlarged portion of the throughway until the tube has been inserted sufficiently into the coupling body for further collet to engage and hold the abutment on the tube so that gas or liquid do not flow until the tube is fully locked in the coupling body.

## Description

This invention relates to tube couplings and is particularly although not exclusively applicable to push-in type tube couplings for use vehicle engine fuel supply lines.

European Patent Publication No. 0597711 discloses a tube coupling comprising a coupling body having a throughway open at one end in which a seal or seals are mounted to receive and engage a tube. A first collet is mounted in the throughway to grip the tube and resist extraction of the tube from the throughway. A cap is mounted to extend over the open end of the coupling body and to house second collet arranged head to head with the first collet. The second collet is engageable with an annular abutment on the tube to retain the tube in the coupling body. A single release means in the form of plunger elements is provided on the cap to act on the collets to allow release of the tube from the coupling body. It is possible for fluid to flow from the tube to the throughway in the coupling body even though the tube is not correctly engaged by the collets and provided the fluid pressure is sufficiently low the tube will not be "blown" out of the coupling body. In certain applications such as fuel line connectors for which engines it is highly desirable for the tube to be correctly locked in the coupling body by the collet arrangement before flow of fluid from the tube into the coupling body is established.

This invention provides a tube coupling comprising a coupling body having a throughway open at one end to receive a tube, the throughway having an enlarged portion adjacent the open end to receive a tube to be connected to the coupling body, a seat in the enlarged portion of the throughway to receive and locate an end of a tube to be connected to the coupling body, sealing means in the enlarged portion of the throughway spaced from the seat to seal with an outer surface of the tube at a location spaced from the tube end and means on the coupling body to engage with a feature on the tube spaced from the tube end to lock the tube in the coupling body when the tube end is engaged with said seat in the throughway, wherein the tube end is closed and the tube wall adjacent the end has one or more side ports for the gas or liquid medium to flow, the arrangement being such that the end part of the tube containing the side port does not project through the seal in the throughway to communicate with the enlarged portion of the throughway until the tube has been inserted sufficiently into the coupling body for the locking means to engage the feature on the tube and the end of the tube to engage the seat of the throughway.

In one arrangement according to the invention the seat for the tube end is formed by a stepped counterbore between the throughway and enlarged portion of the throughway in which the tube wall is a close fit with a first annular shoulder between the counterbore and throughway with which the tube end is engageable and a second annular shoulder between the counterbore and the enlarged portion of the throughway and one or more channels are formed in the wall of the connector body between the second step and throughway for flow of fluid between the enlarged portion of the throughway around the tube and the throughway itself.

Further the enlarged portion of the throughway may have a further annular shoulder spaced between the seat and open end facing towards the seat and the sealing means for the tube are located in the enlarged portion of the throughway adjacent the further shoulder.

In the latter arrangement the sealing means of the tube may comprise one or more annular sealing rings located in the enlarged portion of the throughway.

In any of the above arrangements the feature on the tube with which the locking means is engageable may comprise an integral annular bead encircling the tube wall.

More specifically the locking means for engaging the bead may comprise a collet mounted in the open end of the coupling body and arranged to permit entry of the bead carrying tube into the coupling body and to retrain extraction of the bead carrying tube.

The coupling body may have an additional collet for gripping the outer surface of the tube to restrain the tube against extraction of the coupling body.

The following is a specific embodiment of the invention, reference being made to the accompanying drawings, which show a tube coupling for a fuel pipe showing the pipe before and after insertion in the coupling.

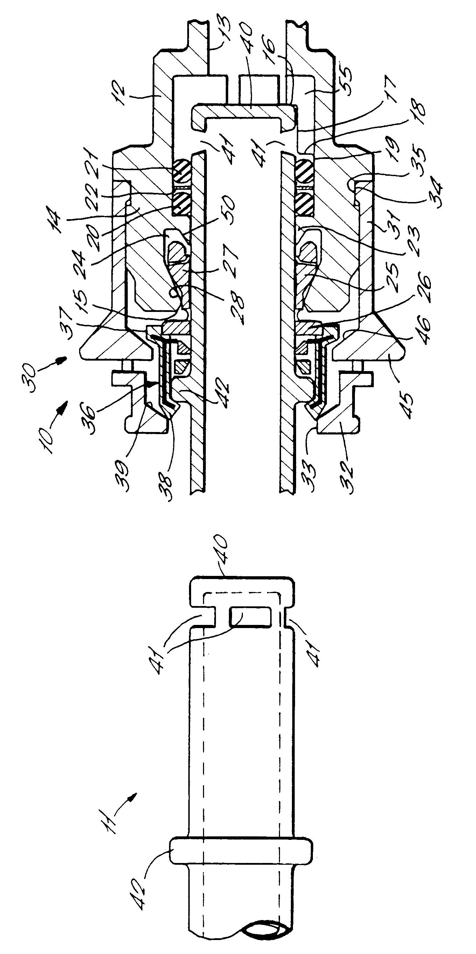

The drawing shows a tube coupling indicated generally at 10 and an end part of the fuel pipe indicated generally at 11 for engagement in the coupling. The fuel pipe/coupling form part of a fuel line for a motor vehicle engine, the coupling being embodied, for example, in the engine fuel pump for delivery of fuel from the fuel tank via the fuel pipe to the pump.

The coupling 10 comprises a coupling body 12 having a throughway 13 for delivery of fuel to the pump of other component in which the coupling is incorporated. The coupling has an enlarged end portion 14 into which the throughway 13 extends with an open end 15 through which an end portion of the pipe 11 is inserted.

The throughway 13 is stepped outwardly at 16 to an annular seat 17 formed in the enlarged portion of the coupling body to receive an end part of the pipe 11 with the end face of the pipe engaging the step 16. The annular seat 17 gives way in turn at a further annular step 18 to a further enlarged portion of the throughway 19 in which a pair of O-ring seals 20,21 are mounted with a spacer 22 between them to engage the outer surface of the pipe 11. The seals are located in engagement with annular abutment 23 encircling the throughway and within which the pipe 11 is a close fit. Along the shoulder 23 towards the open end of the coupling body there is a cavity 24 into which a primary collet 25 extends through the open end 15 of the coupling body. The collet has an annular head 26 disposed outside the coupling body and a plurality of resilient fingers 27 projecting from the annular head through the opening 15 into the cavity 24 gripping the two in the cavity. Cavity 24 is formed with a tapered cam surface 28 extending to the open end of the cavity and the collet arms 27 are engageable with the taper cam surface to be forced inwardly as the collet is drawn outwardly of the coupling body to engage and grip the pipe extending through the collet to recessed withdrawal of the pipe from the coupling body.

The coupling body 14 has an end cap 30 comprising a skirt 31 encircling the coupling body and an end wall 32 having an opening 33 through which the pipe 11 may be inserted. The open end of the skirt 31 has an annular rib 34 which is snapped into engagement with a groove 35 encircling the coupling body to retain the cap on the body. A secondary collet indicated at 36 is mounted within the cap 30 having an annular head 37 which is seated on the head 28 of the first collet. The secondary collet has a plurality of resilient fingers 38 projecting towards the open end 33 of the cap and engageable with an inclined inner surface 39 on the inside of the end wall of the cap.

The pipe end 11 to be inserted in the coupling body is a closed end 40 and has a plurality of orifices 41 spaced around the pipe wall adjacent the closed end 40 for release of fuel or other fluids from the pipe into the coupling body. An annular bead 42 is formed integrally with the pipe at a location spaced from the end of the pipe.

The fingers 38 of the secondary collet 36 have cranked ends which are engageable over the bead 42 when the end of the pipe 11 is inserted in the coupling body with the closed end 40 in engagement with the step 16. The resilient fingers 27 of the primary collet engage the pipe and restrain it from withdrawal of the coupling body and the cranked ends of the fingers 38 of the secondary collet which engage over the bead 42 and are trapped against the inclined inner face 39 of the end wall 32 so that the pipe end is doubly locked in the coupling body.

A pair of radially extending lugs 45 is formed in diametrically spaced slots in the skirt 31 of the cap and the wall of the cap is formed sufficiently flexible to allow the lugs to be placed radially inwardly. The lugs have inclined faces 46 which are engageable with the the head 37 of the secondary collet to depress the head axially towards the coupling body to release the cranked ends of the fingers 38 from the end wall of the cap to allow the fingers of the second collet to spring apart and release the bead 42. Depressing the head of the secondary collet towards the coupling body also carries the head of the primary collet towards the end of the coupling body thereby releasing the fingers of the primary collet from the tapered cam surface 28. The aforesaid abutment 23 has an integral ramp 50 which engages and causes the fingers of the primary collet to spread radially as the collet is depressed into the coupling body to release the collet fingers from the pipe 11. Thus the pipe can be extracted from the coupling body.

The orifices 41 in the pipe are positioned adjacent the end 40 of the pipe and the bead 42 so that when the pipe is inserted into the coupling body, the orifices 41 are not located passed the annular seals 21,22 until the bead 42 has snapped through and is retained by the secondary collet. Thus if the pipe is not assembled correctly in the coupling body with the bead 42 snapped through the fingers 38 of the secondary collet, there is no connecting passageway between the pipe and the throughway 13 so that the engine does not start through lack of fuel supply. Attention is therefore drawn immediately to the failure to make a connection of the pipeline to the coupling body correctly. When the pipeline has been correctly inserted in the coupling body with the orifices 41 located passed the seals 22,21 and the bead 42 retained by the secondary collet 36 fuel can flow from the pipe out through the orifices 41 and a plurality of circumferentially spaced axially extending grooves 55 are provided in the annular seat 17 extending between the shoulder 18 and the throughway 13 beyond the step 16 for flow of fuel from the orifices 41 to the throughway 13.

Both primary and secondary collets 27,36 are moulded in plastics and the secondary collet 36 embodies an annular metal skeleton in the form of a ring embodied in the head 37 of the collet and integral metal fingers embodied in the collet fingers 38. In the event of a fire destroying the plastics component of the secondary collet, the metal skeleton remains in existence to verify the presence of a collet in the coupling connection.

## Claims

1. A tube coupling comprising a coupling body having a throughway open at one end to receive a tube, the throughway having an enlarged portion adjacent the open end to receive a tube to be connected to the coupling body, a seat in the enlarged portion of the throughway to receive and locate an end of a tube to be connected to the coupling body, sealing means in the enlarged portion of the throughway spaced from the seat to seal with an outer surface of the tube at a location spaced from the tube end and means on the coupling body to engage with a feature on the tube spaced from the tube end to lock the tube in the coupling body when the tube end is engaged with said seat in the throughway, wherein the tube end is closed and the tube wall adjacent the end has one or more side ports for the gas or liquid medium to flow, the arrangement being such that the end part of the tube containing the side port does not project through the seal in the throughway to communicate with the enlarged portion of the throughway until the tube has been inserted sufficiently into the coupling body for the locking means to engage the feature on the tube and the end of the tube to engage the seat of the throughway.

2. A tube coupling as claimed in claim 1, wherein the seat for the tube end is formed by a stepped counterbore between the throughway and enlarged portion of the throughway in which the tube wall is a close fit with a first annular shoulder between the counterbore and throughway with which the tube end is engageable and a second annular shoulder between the counterbore and the enlarged portion of the throughway and one or more channels are formed in the wall of the connector body between the second step and throughway for flow of fluid between the enlarged portion of the throughway around the tube and the throughway itself.

3. A tube coupling as claimed in claim 1, wherein the enlarged portion of the throughway has a further annular shoulder spaced between the seat and open end facing towards the seat and the sealing means for the tube are located in the enlarged portion of the throughway adjacent the further shoulder.

4. A tube connector as claimed in claim 3, wherein the sealing means of the tube comprise one or more annular sealing rings located in the enlarged portion of the throughway.

5. A tube coupling as claimed in claim 1, wherein the feature on the tube with which the locking means is engageable comprises an integral annular bead encircling the tube wall.

6. A tube coupling as claimed in claim 5, wherein the locking means for engaging the bead comprise a collet mounted in the open end of the coupling body and arranged to permit entry of the bead carrying tube into the coupling body and to retrain extraction of the bead carrying tube.

7. A tube coupling as claimed in claim 6, wherein the coupling body has an addition collet for gripping the outer surface of the tube to restrain the tube against extraction of the coupling body.
